# EUROPEAN PATENT SPECIFICATION

(11) **EP 1 989 066 B1**
(45) Date of publication and mention of the grant of the patent: **08.07.2009**
(21) Application number: 07726414.1
(22) Date of filing: 16.02.2007
(51) Int. Cl.: B60C 27/10

(54) **TENSIONING AND LOCKING DEVICE, IN PARTICULAR FOR SNOW CHAINS**
SPANN- UND SPERRVORRICHTUNG, IM BESONDEREN FÜR SCHNEEKETTEN
DISPOSITIF DE TENSION ET DE VERROUILLAGE, EN PARTICULIER POUR DES CHAÎNES ANTIDÉRAPANTES

(30) Priority: 27.02.2006 IT VE20060010
(43) Date of publication of application: 12.11.2008
(73) Proprietor: ADVANCED STEEL ENGINEERING LTD, Dublin 6 (IE)
(72) Inventor: COYLE, JASPER, Dublin 6 (IE)
(74) Representative: Piovesana, Paolo
(86) International application number: PCT/EP2007/051526
(87) International publication number: WO 2007/096310

(56) References cited:
- WO-A-20/04022363
- DE-B3-2102004 037 33
- DE-U1- 29 703 911
- US-A1- 2003 102 065

## Description

The present invention relates to a tensioning and locking device, in particular for snow chains.

Known tensioning and locking devices for snow chains are fixed at two points, namely at one end of the outer chain and at one end of a transverse chain, and are provided with a flexible traction cable wound about a spool and elastically engaging the other end of the outer chain.

These devices are generally provided with levers and pushers which, depending on their position, enable the cable to be pulled to connect the two ends of the chain together, prevent its further exit to ensure chain tensioning, and lock this tensioning configuration.

However these known devices present certain drawbacks, and in particular:
- danger during use as there is nothing to prevent elastic return of the traction cable by the spring, which can strike the user's hands,
- laborious and difficult operation.

According to the preamble of claim 1, US 2003/102065 concerns a clamping device for a nonskid tire chain with a housing and an actuation member, which has a lock-in position, in which a clamping cord which can be pulled into the housing through an opening in the housing, can be blocked counter to its clamping direction, as well as a release position, in which the blocking is canceled,

WO 2004022363 relates to a tensioning device for an anti-skid chain, comprising a housing and an actuating member. Said actuating member has at least one position, in which a tensioning strand that can be introduced into the housing through a housing opening can be blocked against the tensioning direction, in addition to a release position, in which the block is removed and the tensioning strand is attached to a winding reel inside the housing.

DE 102004037332 discloses a tensioning system for snow chains on tires comprises a spring-loaded reel, to which a tensioning cable for the chains is attached. This has a brake which is operated by a lever. A second reel carries a second cable which can be pulled out in the opposite direction.

An object of the invention is to provide a tensioning and locking device which can be operated easily and comfortably.

Another object of the invention is to provide a device which enables the degree of tensioning to be maintained constant even following settling during vehicle travel.

These objects are attained according to the invention by a tensioning and locking device, in particular for snow chains as claimed in claim 1.

A preferred embodiment of the present invention is further described hereinafter with reference to the accompanying drawings, in which:

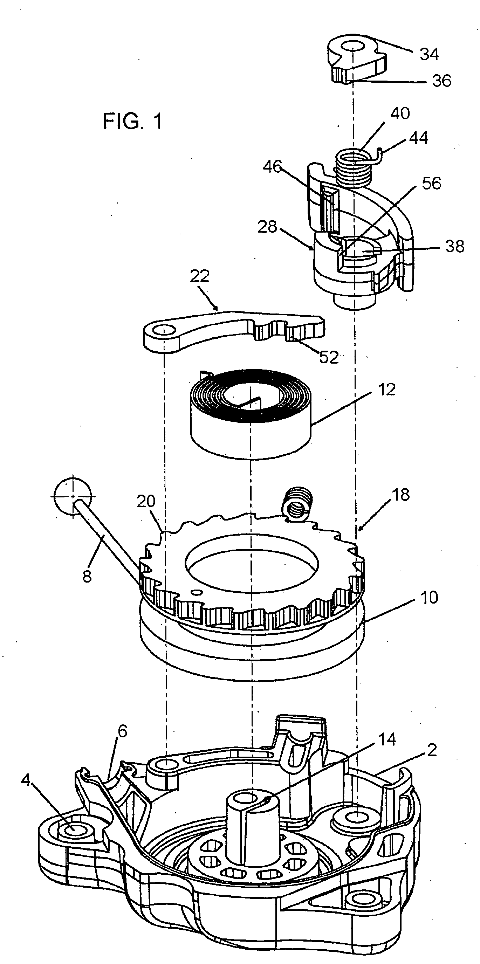

Figure 1 is an exploded perspective view of the device of the invention,
Figure 2 shows in it plan view during extraction of the traction cable, and
Figure 3 shows it during retraction of the traction cable.

As can be seen from the figures the tensioning and locking device according to the invention comprises substantially a casing 2 closable by a cap, not shown in the drawings, and provided with two rings 4 to which the end of the transverse chain and the end of the outer chain of snow chains are fixed.

The casing comprises in its lateral surface a slot 6 for passage of a traction cable 8 fixable to the other end of the outer chain.

The traction cable is secured to a spool 10 housed in the casing 2.

A helical spring 12 is inserted into the cylindrical cavity of the spool 10 and has its inner end secured to a slot 14 provided in the casing and its other end engaged in a tooth 16 provided on the inner lateral surface of the spool.

With the spool there is associated a ring gear 18 the teeth 20 of which are elastically engaged by a first retention pawl, indicated by 22, pivoted to the casing on a pin 24. The head of the retention pawl 22 engages in a seat 26 provided on a rotatable member 28 pivoted on a pin 30 rigid with the casing 2 and provided with an operating lever 32. On the pin 30 there is also pivoted a second retention pawl 34 provided with a tooth 36, the purpose of which will be apparent hereinafter. The second retention pawl 34 is housed in a seat 38 provided in the member 28 and is rigid therewith by virtue of the presence of a spring 40 having one end 42 housed in a seat present in the member itself and acting at its other end 44 on the retention pawl 34.

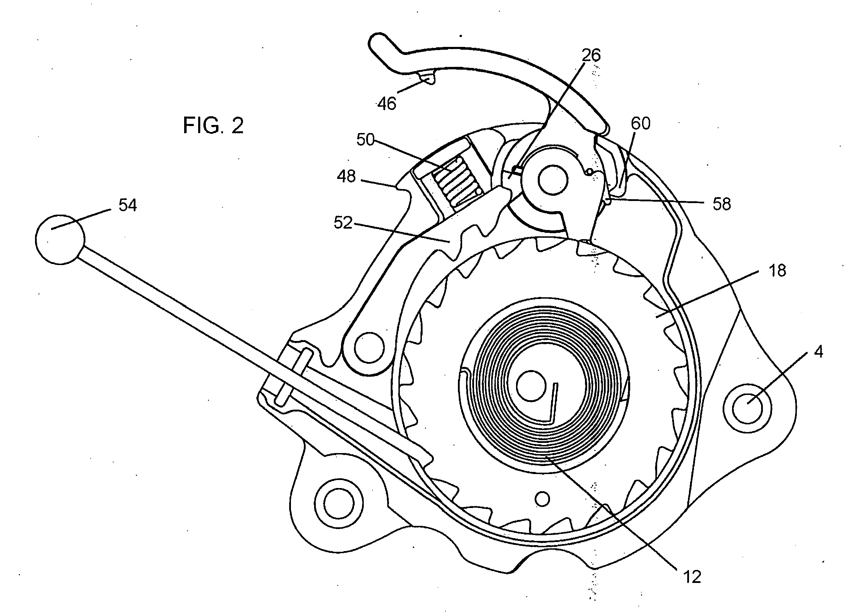

The device of the invention operates in the following manner:
after fixing the ends of the inner chain and positioning all the transverse chains across the wheel, the lever arm 32 is rotated clockwise (with respect to Figure 2), after elastically disengaging an appendix 46 from a tooth 48 provided on the casing 2 and elastically engaging an appendix 58 with a tooth 60. In this manner the retention pawl 22, the head of which is guided within the seat 26, rotates anticlockwise about the pin 24, against the elastic action of a spring 50, and disengages its teeth 52 from the teeth 20 of the ring gear.

While in this configuration the tooth 36 of the retention pawl 34 interferes via its active flank with the teeth 20 of the ring gear 18, but does not hinder clockwise rotation of this latter as it can rock about the pin 32 against the elastic action of the spring 44.

In this manner the cable 8 can be extracted from the casing 2, while simultaneously loading the helical spring 12, to hence engage its end 54 with the other end of the outer chain.

If the user accidentally loses grip on the cable, it is prevented from suddenly winding on the spool by the action of the helical spring, because in this configuration the teeth 20 of the ring gear 18 interfere with the passive flank of the tooth 36 of the second retention pawl 34, to prevent rotation of the spool in the opposite direction to that which enables the traction cable to be extracted. In particular, rotation of the retention pawl 34 is prevented by the contrasting action presented by a shoulder on the member 28, this member being prevented from rotating by bearing against the casing 2.

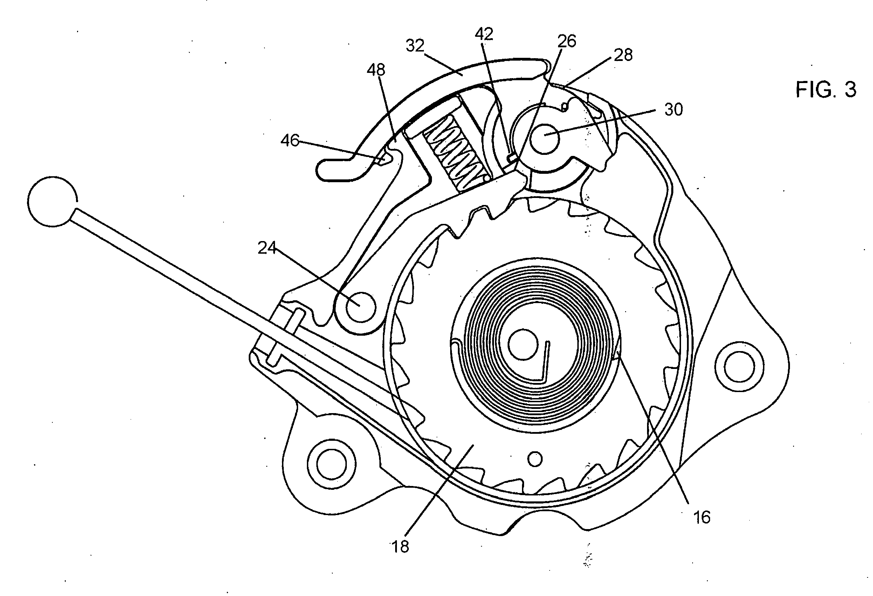

When the end of the traction cable has been engaged with the end of the outer chain, the user firstly disengages the appendix 58 from the tooth 60 then rotates the lever arm 32 in the opposite direction to the preceding (see Figure 3).

As a result of this rotation the lever arm 22 is brought into the configuration in which its teeth 52 engage in the toothing of the ring gear 18. This enables the cable to automatically wind onto the spool 10 which, under the action of the preload of the helical spring 12, rotates freely as the engagement between the passive flanks of the ring gear teeth 20 and of the teeth 52 of the retention pawl 22 enables these to easily pass over each other.

It should be noted that when the cable has been drawn into the casing by the amount required to tension the chain, no slackening of this tension is possible as rotation of the spool 10 in the clockwise direction (with respect to Figure 3) is prevented by the engagement between the active flanks of the ring gear and of the retention pawl.

From the aforegoing it is apparent that the device of the invention presents numerous advantages, and in particular:
- it can be easily and comfortably activated,
- it maintains the degree of tensioning stable,
- it presents no danger to the user as accidental elastic retraction of the traction cable by the spool is prevented.

## Claims

1. A tensioning and locking device, in particular for snow chains, comprising:
- a casing (2) housing a spool (10) about which a traction cable is wound,
- elastic means (12) preloadable as a result of withdrawing the cable (8) from the casing (2),
- a ring gear (18) coaxially rigid with said spool (10),
- a first retention pawl (22, 52) which removably engages said ring gear (18) and which, when engaged, enables the spool (10) to rotate in a first direction but prevents its rotation in a second direction opposite to the preceding,
- a second retention pawl (34, 36) which removably engages said ring gear (18) and which, when engaged, enables the spool (10) to rotate in the second direction but prevents its rotation in the first direction,
- an intermediate member (28) operable by the user, and acting simultaneously on said first retention pawl (22, 52) and on said second retention pawl (34, 36) such that when the first retention pawl (22, 52) is engaged with the ring gear (18) the second retention pawl (34, 36) is disengaged therefrom and vice versa,
**characterised in that** said intermediate member (28) is provided with elastic means (40) acting on said second retention pawl (34,36) and consists of a rotatable body provided with an articulation arm (32) pivoted to the casing on a pin (30), on which the second retention pawl (34, 36) and the elastic means (40) are also pivoted

2. A device as claimed in claim 1, **characterised in that** the first retention pawl consists of a lever arm (22) provided with teeth (52) engaging the ring gear (18), the head of the lever arm being housed in a seat (26) provided in said intermediate member (28).

3. A device as claimed in claim 1, **characterised in that** the second retention pawl (34, 36) is housed in a seat (38) provided in said rotatable body.

## Patentansprüche

1. Spann- und Verriegelungsvorrichtung, insbesondere für Schneeketten, die umfasst:
- ein Gehäuse (2), in dem eine Spule (10) untergebracht ist, um die ein Zugseil gewickelt ist,
- elastische Mittel (12), die in Folge des Herausziehens des Seils (8) aus dem Gehäuse (2) vorbelastbar sind,
- ein Ringzahnrad (18), das mit der Spule (10) koaxial starr verbunden ist,
- eine erste Rückhalteklinke (22, 52), die mit dem Ringzahnrad (18) lösbar in Eingriff ist und die, wenn sie in Eingriff ist, der Spule (10) ermöglicht, sich in einer ersten Richtung zu drehen, jedoch deren Drehung in einer zu der vorhergehenden Richtung entgegengesetzten zweiten Richtung verhindert,
- eine zweite Rückhalteklinke (34, 36), die mit dem Ringzahnrad (18) lösbar in Eingriff ist und die, wenn sie in Eingriff ist, der Spule (10) ermöglicht, sich in der zweiten Richtung zu drehen, jedoch deren Drehung in der ersten Richtung verhindert,
- ein Zwischenelement (28), das durch den Anwender betätigbar ist und gleichzeitig auf die erste Rückhalteklinke (22, 52) und auf die zweite Rückhalteklinke (34, 36) wirkt, so dass dann, wenn die erste Rückhalteklinke (22, 52) mit dem Ringzahnrad (18) in Eingriff ist, die zweite Rückhalteklinke (34, 36) hiermit nicht in Eingriff ist, und umgekehrt,
**dadurch gekennzeichnet, dass** das Zwischenelement (28) mit elastischen Mitteln (40) versehen ist, die auf die zweite Rückhalteklinke (34, 36) wirken und aus einem drehbaren Körper bestehen, der mit einem Schwenkarm (32) versehen ist, der an dem Gehäuse an einem Stift (30) schwenkbar ist, an dem auch die zweite Rückhalteklinke (34, 36) und die elastischen Mittel (40) schwenkbar sind.

2. Vorrichtung nach Anspruch 1, **dadurch gekennzeichnet, dass** die erste Rückhalteklinke aus einem Hebelarm (22) besteht, der mit Zähnen (52) versehen ist, die mit dem Ringzahnrad (18) in Eingriff sind, wobei der Kopf des Hebelarms in einem in dem Zwischenelement (28) vorgesehenen Sitz (26) untergebracht ist.

3. Vorrichtung nach Anspruch 1, **dadurch gekennzeichnet, dass** die zweite Rückhalteklinke (34, 36) in einem in dem drehbaren Körper vorgesehen Sitz (38) untergebracht ist.

## Revendications

1. Dispositif de tension et de verrouillage, en particulier pour chaînes à neige, comprenant :
- un logement (2) contenant une bobine (10) autour de laquelle est enroulé un câble de traction,
- un moyen élastique (12) qui peut être préalablement sollicité à la suite d'un retrait du câble (8) du logement (2),
- une couronne dentée (18) coaxialement solidaire avec ladite bobine (10),
- un premier cliquet due rétention (22, 52) qui s'engage de manière amovible dans ladite couronne dentée (18) et qui, une fois engagé, permet à la bobine (10) de tourner dans un premier sens, mais l'empêche de tourner dans un second sens opposé au précédent,
- un second cliquet de rétention (34, 36) qui s'engage de manière amovible sur ladite couronne dentée (18) et qui, une fois engagé, permet à la bobinie (10) de tourner dans le second sens, mais l'empêche de tourner dans le premier sens,
- un élément intermédiaire (28) pouvant être actionné par l'utilisateur et agissant simultanément sur ledit premier cliquet de rétention (22, 52) et sur ledit second cliquet de rétention (34, 36) de sorte que, lorsque le premier cliquet de rétention (22, 52) est engagé sur la couronne dentée (18), le second cliquet de rétention (34, 36) soit dégagé de celui-ci et vice versa,
**caractérisé en ce que** ledit élément intermédiaire (28) est muni d'un moyen élastique (40) agissant sur ledit second cliquet de rétention (34,36) et est constitué d'un corps rotatif muni d'un bras d'articulation (32) articulé au logement sur une broche (30), sur laquelle le second cliquet de rétention (34, 36) et le moyen élastique (40) sont également articulés.

2. Dispositif selon la revendication 1, **caractérisé en ce que** le premier cliquet de rétention est constitué d'un bras de levier (22) muni de dents (52) s'engageant sur la couronne dentée (18), la tête du bras de levier étant logée dans un siège (26) aménagé dans ledit élément intermédiaire (28).

3. Dispositif selon la revendication 1, **caractérisé en ce que** le second cliquet de rétention (34, 36) est logé dans un siège (38) aménagé dans ledit corps rotatif.
